Europäisches Patentamt

European Patent Office

Office européen des brevets

(11) Publication number: **0 085 314**
**B1**

## (12) EUROPEAN PATENT SPECIFICATION

(45) Date of publication of patent specification: **10.12.86**

(21) Application number: **83100249.8**

(22) Date of filing: **13.01.83**

(51) Int. Cl.⁴: **B 60 Q 1/40**

(54) A device for automatically deenergizing the direction indicators of a motor vehicle.

(30) Priority: **01.02.82 IT 4570282**

(43) Date of publication of application:
**10.08.83 Bulletin 83/32**

(45) Publication of the grant of the patent:
**10.12.86 Bulletin 86/50**

(84) Designated Contracting States:
**AT BE CH DE FR GB IT LI NL SE**

(56) References cited:
**DE-A-2 836 619**
**GB-A-2 089 594**

(73) Proprietor: **ZELTRON ISTITUTO ZANUSSI PER
L'ELETTRONICA S.P.A.
Via Principe di Udine, 66
I-33030 Campoformido Udine (IT)**

(72) Inventor: **Abbate, Giampiero
Via Cavour 5
I-33080 Porcia Pordenone (IT)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

Courier Press, Leamington Spa, England.

# Description

The present invention relates to a device for automatically deenergizing the direction indicators of a motor vehicle, comprising at least one actuator adapted to be controlled for deenergizing said direction indicators (see i.e. DE—A—2836619).

As generally known, the direction indicators of a motor vehicle are usually energized by manual operation, and adapted to be automatically deenergized by means of an electro-mechanical control device in response to the rotation of the steering wheel of the vehicle opposite to the indicated direction. The control device is usually disposed in the steering column and comprises electric contacts for controlling a relay or the like provided for selectively energizing and deenergizing the direction indicators. The electric contacts controlling the deenergization of the relay are actuated by mechanical stop members associated with the control device at determined angular positions and adapted to be displaced, preferably through a reduction gear arrangement, in response to the rotation of the steering wheel.

In preparation of a change of the direction of travel, the driver of the vehicle actuates the direction indicators for the selected direction by manual operation, whereafter he rotates the steering wheel in the respective direction. Subsequently the steering wheel is returned to the original angular position by rotation in the opposite sense.

During the rotation of the steering wheel in the opposite sense, the mechanical stop members actuate the electric contacts for deenergizing the previously energized direction indicators.

As the mechanical stop members are disposed at certain angular intervals, they are unable to ensure a reliable deenergization of the direction indicators. In addition, the entire electro-mechanical control device is of a rather complicated and bulky construction, and its operation is scarcely reliable and not very accurate, particularly in the case that the steering wheel is turned by a relatively small angle only.

It is therefore an object of the present invention to provide a device for automatically deenergizing the direction indicators of a motor vehicle which is of a compact and simple construction and of reliable and accurate function irrespective of the turning angle of the steering wheel.

In accordance with the invention, this object is attained by the provision of a device for automatically deenergizing the direction indicators of a motor vehicle, comprising at least one actuator adapted to be controlled for deenergizing said direction indicators, such device being principally characterized in that said actuator is controlled by the output of a comparator having a first input connected to a reference voltage source through a voltage variator operatively connected to the steering wheel of the motor vehicle, and a second input connected to said reference voltage source through a peak value memory stage and a peak value dividing stage connected in series with said voltage variator, said memory stage having a reset input controlled by the output of said comparator.

The invention is claimed in two sets of claims of similar content, both numbered 1 to 3. The first set is for the states FR and GB and has an independent claim with its prior art portion based on GB—A—2089594 or FR—A—2494644 published after the priority date of this patent application; the second set is for the states AT, BE, CH, DE, IT, LI, NL, SE and has an independent claim with its prior art portion based on DE—A—2836619.

Further characteristics and advantages of the invention will become evident from the following description of exemplary embodiments with reference to the accompanying drawings, wherein:

Fig. 1 shows a block circuit diagram of a first embodiment, and

Fig. 2 shows a block circuit diagram of a second embodiment of the invention.

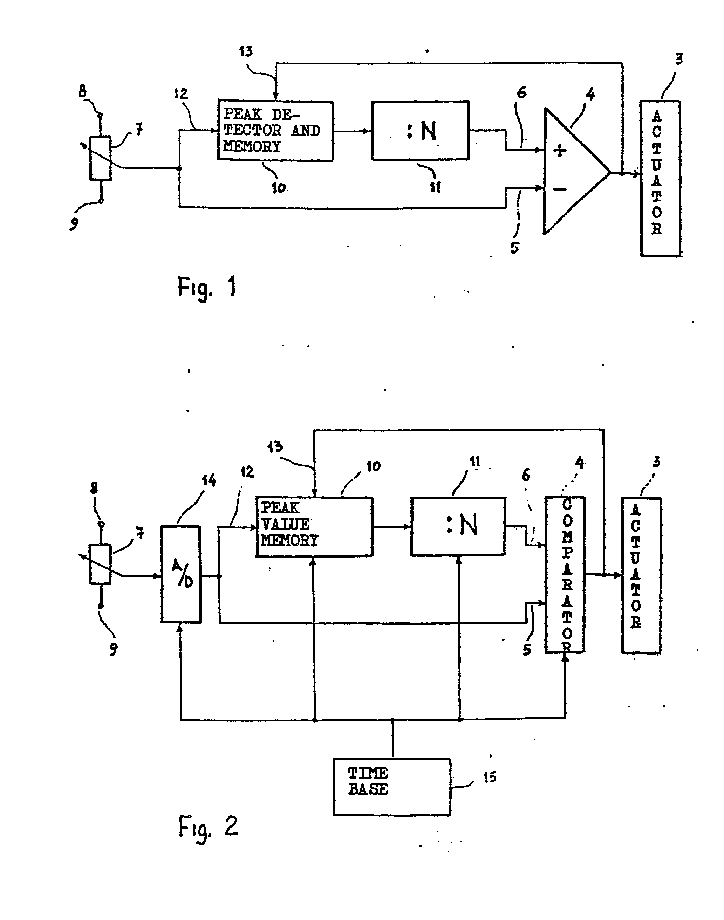

In the embodiment shown in fig. 1, a device for automatically deenergizing the direction indicators of a motor vehicle comprises at least one actuator 3 formed for instance of two relays operable to deenergize respective direction indicators previously energized by manual actuation of conventional control means (not shown).

Actuator 3 is of the type adapted to deenergise the direction indicators in response to the presence of a suitable enable signal, for instance a voltage having the value "zero", at its input terminal which is connected to the output of a comparator stage 4. Comparator 4 preferably comprises an operational amplifier adapted in a per se known manner to generate a direct current error signal at its output, the amplitude of which is variable as a function of a difference between the voltages applied to its two inputs 5 and 6.

The inverting input 5 of comparator 4 is directly connected to the sliding contact of a voltage variator 7 the two terminals 8 and 9 of which have a dc reference voltage applied thereto. Voltage variator 7 may for instance be a potentiometer operatively connected to the steering wheel of the motor vehicle through reduction gear means (not shown).

The sliding contact of potentiometer 7 is also connected to the other input 6 of comparator 4 through a peak value memory stage 10 and a voltage divider stage 11 connected in series therebetween.

Stage 10 comprises a peak detector and memory circuit, i.e. a per se known circuit adapted to store and to transfer to its output the maximum value of a voltage applied to its main input 12. Stage 10 further comprises a reset input 13 adapted to be controlled by the output of comparator 4 with the above mentioned enable signal for resetting its memory section.

In operation, as long as the steering wheel is in the position for rectilinear travel of the vehicle, the sliding contact of potentiometer 7 is at a predetermined dc voltage which is applied to comparator 4 to be compared to a fraction of the same voltage proportional to the division factor of stage 11. As a result, the output of comparator 4 is at an "error" voltage which is different from the above noted enable signal. When the vehicle is to change its direction of travel, the direction indicators on the respective side are energized by manual operation in a known manner, and the steering wheel is turned up to a mamimum turning angle. This causes the dc voltage appearing at the sliding contact of potentiometer 7 to vary, as a function of the reduction rate between the steering wheel and the potentiometer, so as for example to increase up to a maximum value which is stored by stage 10. As the steering wheel is subsequently turned back to its original angular position, the voltage appearing at the sliding contact of potentiometer 7 will also return to its original value. The instantaneous value of this voltage controls the input 5 of comparator 4, while the input 6 thereof continues to be controlled by the maximum value of the voltage stored in stage 10 and divided by the factor N in stage 11. Before the steering wheel has completely returned ot its original position, the instantaneous value of the voltage applied to input 5 of comparator 4 becomes equal to the value of the voltage applied to input 6, causing comparator 4 to generate the above noted enable signal at its output, whereby actuator 3 is activated to deenergize the direction indicators, while memory stage 10 is reset to zero preparatory to renewed actuation of the device in the manner described.

It is to be noted that the deenergization of the direction indicators takes place, as usually desired, when the steering wheel has not yet completely returned to its original position for rectilinear travel of the vehicle. The respective advance angle depends, among other factors on the division factor N of voltage divider 11, and may therefore be determined by suitably selecting this division factor.

From the above description it is evident that the device according to the invention, being composed of electronic components, may have very small dimensions so as not to present any problems with regard to its installation in a motor vehicle. In addition, operation of the device is extremely accurate and reliable, as stated as an object of the invention.

The described device may be modified in various manners within the scope of the invention. It is thus possible to provide means for processing the various signals in digital instead of in analogue form. In this case, the device for deenergizing the direction indicators may be designed in accordance with the modification shown in fig. 2, which differs from that shown in fig. 1 by the operational amplifier being replaced by a numeric comparator 4, the voltage divider being replaced by a numeric divider 11, and the peak value memory stage 10 being modified to· a digital memory in a manner familiar to those skilled in the art.

Memory stage 10 may thus comprise a numeric comparation circuit associated with a memory section. In this case, input 12 of memory stage 10 and input 5 of comparator 4 are connected to the sliding contact of potentiometer 7 through a analog/digital converter 14.

A time base stage 15 controls stages 4, 10, 11 and 14 with timing signals for synchronizing the functions of the device in a per se known manner.

The different processing of the various signals apart, the operation of the device shown in fig. 2 is identical to that of the device shown in fig. 1.

**Claims for the Contracting States: FR GB**

1. A device for automatically de-energising the direction indicators of a motor vehicle, comprising at least one actuator (3) adapted to be controlled for de-energising said indicators, said actuator (3) being controlled by the output of a comparator(4) having a first input (5) connected to a reference voltage source (8, 9) through a voltage variator (7) operatively connected to the steering wheel of the motor vehicle and a second input (6) connected to said reference voltage source (8, 9) through a peak value memory stage (10) connected in series with the output of said voltage variator (7), said memory stage (10) having a reset input controlled by the output of said comparator (4), characterised in that a peak value dividing stage (11) is connected in series between said peak value memory stage (10) and said second input (6) of said comparator (4).

2. A device according to claim 1 characterised in that said dividing stage comprises a voltage divider (11).

3. A device according to claim 1 wherein said peak value memory stage, said dividing stage and said comparator are of the digital type, chracterised in that the first input (5) of said comparator (4) and the main input (12) of said memory stage (10) are connected to said voltage variator (7) through an analogue/digital converter (14).

**Claims for the Contracting States: AT BE CH DE IT LI NL SE**

1. A device of automatically deenergizing the direction of a motor vehicle, comprising at least one actuator adapted to be controlled for deenergizing said direction indicators, characterized in that said actuator (3) is controlled by the output of a comparator (4) having a first input (5) connected to a reference voltage source (8, 9) through a voltage variator (7) operatively connected to the steering wheel of the motor vehicle, and a second input (6) connected to said reference voltage source through a peak value memory (10) and a peak value dividing stage (11) connected in series with said voltage variator, said memory stage having a reset input controlled by the output of said comparator.

2. A device according to claim 1, characterized in that said memory stage comprises a peak detector and memory circuit (10), and in that dividing stage comprises a voltage divider (11).

3. A device according to claim 1, wherein said peak value memory stage, said dividing stage and said comparator are of the digital type, characterised in that the first input (5) of said comparator (4) and the main input (12) of said memory stage (10) are connected to said voltage variator (7) through an analog/digital converter (14).

**Patentansprüche für die Vertragsstaaten: FR GB**

1. Vorrichtung zum automatischen Abschalten der Richtungsanzeiger eines Motorfahrzeugs, enthaltend wenigstens ein Betätigungslied (3), das dazu eingerichtet ist, für die Abschaltung der Anzeiger gesteuert zu werden, wobei das Betätigungsglied (3) durch den Ausgang eines Komparators (4) gesteuert wird, der einen ersten Eingang hat, der mit einer Bezugsspannungsquelle (8, 9) über einen Spannungsversteller (7) verbunden ist, der wirkungsmässig mit dem Lenkrad des Motorfahrzeuges verbunden ist, und einem zweiten Eingang (6) aufweist, der mit der Bezugsspannungsquelle (8, 9) über eine Spitzenwertspeicherstufe (10), die in Serie mit dem Ausgang des Spannungsverstellers (7) geschaltet ist, verbunden ist, wobei die Speicherstufe (10) einen Rücksetzeingang hat, der vom Ausgang des Komparators (4) gesteuert wird, dadurch gekennzeichnet, daß eine Spitzenwertteilerstufe (11) in Serie zwischen die Spitzenwertspeicherstufe (10) und den zweiten Eingang (6) des Komparators (4) geschaltet ist.

2. Vorrichtung nach Anspruch 1, dadurch gekennzeichnet, daß die Speicherstufe einen Spannungsteiler (11) enthält.

3. Vorrichtung nach Anspruch 1, bei der die Spitzenwertspeicherstufe, die Teilerstufe und der Komparator vom digitalen Typ sind, dadurch gekennzeichnet, daß der erste Eingang (5) des Komparators (4) und der Haupteingang (2) der Speicherstufe (10) mit dem Spannungsversteller (7) über einen Analog/Digital-Wandler (14) verbunden sind.

**Patentansprüche für die Vertragsstaaten: AT BE CH DE IT LI NL SE**

1. Vorrichtung zum automatischen Abschaltung der Richtungsanzeiger eines Motorfahrzeugs, enthaltend wenigstens ein Betätigungsglied, das dazu eingerichtet ist, für die Abschaltung der Richtungsanzeiger gesteuert zu werden, dadurch gekennzeichnet, daß das Betigungsglied (3) durch den Ausgang eines Komparators (4) gesteuert ist, der einen ersten Eingang (5) hat, der mit einer Bezugsspannungsquelle (8, 9) über einen Spannungsversteller (7) verbunden ist, der wirkungsmäßig mit dem Lenkrad des Motorfahrzeugs verbunden ist, und einen zweiten Ausgang (6) hat, der mit der Bezugsspannungsquelle über einen Spitzenwertspeicher (10) und eine Spitzenwertteilerstufe (11), die in Serie mit dem Spannungsversteller geschaltet sind, verbunden ist, wobei die Speicherstufe einen Rücksetzeingang hat, der vom Ausgang des Komparators gesteuert wird.

2. Vorrichtung nach Anspruch 1, dadurch gekennzeichnet, daß die Speicherstufe einen Spitzendetektor und eine Speicherschaltung (10) aufweist, und daß die Teilerstufe einen Spannungsteiler (11) enthält.

3. Vorrichtung nach Anspruch 1, bei der die Spitzenwertspeicherstufe, die Teilerstufe und der Komparator vom digitalen Typ sind, dadurch gekennzeichnet, daß der erste Eingang (5) des Komparators (4) und der Haupteingang (12) der Speicherstufe (10) mit dem Spannungsversteller (7) über einen Analog/Digital-Wandler (14) verbunden sind.

**Revendications pour les Etats contractants: FR GB**

1. Un dispositif pour désexciter automatiquement les indicateurs de direction d'un véhicule automobile, comprenant au moins un organe d'actionnement (3) adapté pour être commandé en vue d'une désexcitation desdits indicateurs, ledit organe d'actionnement (3) étant commandé par le signal de sortie d'un comparateur (4) comportant une première entrée (5) reliée à une source de tension de référence (8, 9) par l'intermédiaire d'un variateur de tension (7) connecté fonctionnellement au volant du véhicule automobils et une seconde entrée (6) reliée à ladite source de tension de référence (8, 9) par l'intermédiaire d'un étage de mémorisation de valeur de crête (10) relié en série avec la sortie dudit variateur de tension (7), ledit étage de mémorisation (10) comportant une entrée de remise à zéro commandée par le signal de sortie dudit comparateur (4), caractérisé en ce qu'un étage de division de valeur de crête (11) est connecté en série entre ledit étage de mémorisation de valeur de crête (10) et ladite seconde entrée (6) dudit comparateur (4).

2. Un dispositif selon la revendication 1, caractérisé en ce que ledit étage de division comprend un diviseur de tension (11).

3. Un dispositif selonm la revendication 1, dans lequel ledit étage de mémorisation de valeur de crête, ledit étage de division et ledit comparateur sont du type numérique, caractérisé en ce que la première entrée (5) dudit comparateur (4) et l'entrée principale (12) dudit étage de mémorisation (10) sont reliées audit variateur de tension (7) par l'intermédiaire d'un convertisseur analogique-numérique (14).

**Revendications pour les Etats Contractants: AT BE CH DE IT LI NL SE**

1. Un dispositif pour désexciter utomatiquement les indicateurs de direction d'un véhicule automobile, comprenant au moins un organe d'actionnement adapté pour être commandé pour une désexcitation desdits indicateurs de direction, caractérisé en ce que ledit organe d'actionnement (3) est commandé par le signal de sortie d'un comparateur (4) comportant une première entrée (5) reliée à une source de tension de référence (8, 9) par l'intermédiaire d'un variateur de tension (7) connecté fonctionnellement au volant du véhicule automobile, et une seconde entrée (6) reliée à ladite source de tension de référence par l'intermédiaire d'un étage de mémorisation de valeur de crête (10) et d'un étage de diviseur de valeur de crête (11) connectés en série avec ledit variateur de tension, ledit étage de mémorisation comportant une entrée de remise à zéro commandée par le signal de sortie dudit comparateur.

2. Un dispositif selon la revendication 1, caractérisé en ce que ledit étage de mémorisation comprend un détecteur de crête et un circuit de mémoire (10) et em ce que ledit étage de division comprend un diviseur de tension (11).

3. Un dispositif selon la revendication 1, dans lequel ledit étage de mémorisation de valeur de crête, ledit étage de division et ledit comparateur sont de type numérique, caractérisé en ce que la première entrée (5) dudit comparateur (4) et l'entrée principale (12) dudit étage de mémorisation (10) sont connectées audit variateur de tension (7) par l'intermédiaire d'un convertiseur analogique-numérique (14).

0 085 314

Fig. 1

Fig. 2

1